# EUROPÄISCHE PATENTSCHRIFT

(11) **EP 4 244 956 B1**
(45) Veröffentlichungstag und Bekanntmachung des Hinweises auf die Patenterteilung: **10.12.2025**
(21) Anmeldenummer: 22713263.6
(22) Anmeldetag: 19.01.2022
(51) Int. Cl.: H02K 15/22

(54) **VERFAHREN ZUM FORMEN UND EINBRINGEN VON SPULEN IN EINEN STATOR EINER ELEKTRISCHEN ROTIERENDEN MASCHINE**
METHOD FOR SHAPING AND INTRODUCING COILS INTO A STATOR OF AN ELECTRIC ROTATING MACHINE
PROCÉDÉ DE MISE EN FORME ET D'INTRODUCTION DE BOBINES DANS UN STATOR D'UNE MACHINE ÉLECTRIQUE TOURNANTE

(30) Priorität: 29.01.2021 DE 102021200839
(43) Veröffentlichungstag der Anmeldung: 20.09.2023
(73) Patentinhaber: Siemens Mobility GmbH, 80997 München (DE)
(72) Erfinder: LUTZ, Willi, 91639 Wolframs-Eschenbach (DE); SAFA, Bülent, 91207 Lauf (DE); WAFFLER, Harald, 90537 Feucht (DE); WENDT, Jan, 90489 Nürnberg (DE)
(74) Vertreter: Siemens Patent Attorneys
(86) Internationale Anmeldenummer: PCT/EP2022/051121
(87) Internationale Veröffentlichungsnummer: WO 2022/161825

(56) Entgegenhaltungen:
- DE-A1- 102018 104 838
- JP-A- 2009 195 007
- US-A1- 2005 005 422
- US-A1- 2007 143 983
- US-A1- 2014 201 979
- US-A1- 2019 393 748
- US-B2- 8 471 428

## Beschreibung

Die Erfindung betrifft ein Werkzeug zum Formen und Einbringen von Spulen in einen Stator einer elektrischen rotierenden Maschine sowie eine Verwendung eines derartigen Werkzeugs.

Elektrische rotierende Maschinen mit einer Nennleistung von mehreren hundert bis über eintausend Kilowatt werden insbesondere als Antriebs- bzw. Traktionsmotoren in Schienenfahrzeugen wie Triebzügen für den Regional- und Fernverkehr sowie Lokomotiven eingesetzt. Solche Maschinen bestehen üblicherweise aus einem Stator mit einem ringförmigen Statorkern und einem in dessen Statorinnenraum angeordneten Rotor. Der Stator ist üblicherweise als ein Blechpaket mit einer Mehrzahl durch Statorzähne gebildete offener Statornuten aufgebaut. In den Statornuten sind Spulen einer oder mehrerer Wicklungen angeordnet. Bei Synchron- und Asynchron-Drehstrommaschinen speist üblicherweise ein Stromrichter drei Phasen einer Wicklung.

Eine Spule besteht aus einer oder mehreren Windungen, wobei jede Windung wiederum aus einem Draht oder mehreren parallel geschalteten Drähten, insbesondere Flachdrähten, besteht. Jede Windung weist zwei Windungsseiten entsprechend einem Hin- und einem Rückleiter auf, welche in zwei unterschiedlichen Statornuten liegen. Sofern eine Spule mehrere Windungen umfasst, sind diese innerhalb der Spule seriell geschaltet. Entsprechend der Windung bzw. den mehreren Windungen weist auch die Spule zwei Spulenseiten auf, welche in zwei unterschiedlichen Statornuten und einen bestimmten Nutsprung, d.h. eine Anzahl Statornuten in Umfangrichtung des Statorkerns, voneinander entfernt liegen. Vorzugsweise sind Spulenseiten von zwei Spulen in einer jeweilige Statornut übereinander angeordnet. Der außerhalb der Statornut bzw. des Statorkerns liegende Teil der Spule, welcher die beiden Spulenseiten miteinander verbindet, wird als Spulenkopf bezeichnet. Weiterhin weist die Spule einen Spulenanschluss im Bereich eines Spulenkopfes auf. Die verteilte Anordnung der Spulenseiten in unterschiedlichen Statornuten, auch als verteilte Wicklung bezeichnet, führt dazu, dass sich Spulenköpfe mehrerer Spulen überlappen. Eine verteilte Wicklung eignet sich grundsätzlich sowohl für Synchron- als auch für Asynchron-Drehstrommaschinen.

Insbesondere bei elektrischen Maschinen der genannten Leistungsklassen mit einer verteilten Wicklung kommen so genannte Formspulen zum Einsatz. Eine Formspule besteht beispielsweise aus einer gestapelten Mehrzahl Windungen, welche üblicherweise jeweils aus einem Flachdraht aus beispielsweise Kupfer bestehen und welche jeweils eine elektrische Isolierung in Form einer Folie oder eines Schutzlacks aufweisen. Üblicherweise erfolgt das Formen einer Formspule in mehreren Schritten, wobei in einem ersten Formungsschritt aus den Windungen zunächst eine zweidimensionale plane Spule geformt wird, bei welcher die Spulenseiten und Spulenköpfe in einer Ebene angeordnet sind, und in einem nachfolgenden zweiten Formungsschritt die Spule in eine dreidimensionale räumliche Spule umgeformt wird, bei welcher die Spulenseiten entsprechend dem gewünschten Nutsprung voneinander beabstandet sind. Für eine elektrische Isolierung der Spule ist diese beispielsweise mit einer oder mehreren Lagen eines Glimmerbands umwickelt, welches eine Erhöhung der Nässeresistenz sowie der Wärmeklasse der Spule bewirkt, sowie mit einer oder mehreren Lagen eines Gewebebands umwickelt, welches ergänzend einen mechanischen Schutz der Spule verwirklicht. Die Umwicklung erfolgt dabei beispielsweise vor dem ersten oder vor dem zweiten Formungsschritt, gegebenenfalls jedoch insbesondere im Bereich der Spulenköpfe erst nach dem zweiten Formungsschritt. Die geformten und umwickelten Spulen werden anschließend in die Statornuten eingebracht bzw. eingelegt, wobei dies üblicherweise manuell durch eine Montagefachkraft erfolgt.

US 8 471 428 B2 offenbart ein Werkzeug zum Formen und Einbringen von Spulen in einen Stator einer elektrischen Maschine.

Aus US 2019/393748 A1 ist ein Verfahren zum Herstellen eines Stators mit einem ringförmigen Statorkern bekannt. Der Statorkern weist eine Mehrzahl von Schlitzen, die jeweils eine sich in einer radialen Richtung öffnende Spuleneinfügeöffnung und in Umfangsseitenwänden ausgebildete und sich in einer axialen Richtung erstreckende Aussparungen aufweist. Eine Spule des Statorkerns weist in der Mehrzahl von Schlitzen untergebrachte die Schlitzunterbringungsabschnitte auf. Ein Keil des Statorkerns ist in den Aussparungen platziert. Die Schlitzunterbringungsabschnitte der Spule werden in die Mehrzahl von Schlitzen durch die Spuleneinfügeöffnungen in der radialen Richtung des Statorkerns eingefügt. Danach wird der Keil, der ein thermoplastisches Harz enthält, von einer Seite in der radialen Richtung des Statorkerns in Richtung auf die andere Seite in der radialen Richtung durch die Spuleneinfügeöffnung bewegt, während der Keil thermisch verformt wird, so dass dadurch der Keil mit den Aussparungen in Eingriff gebracht wird, so dass der Keil zumindest einen Teil der Spuleneinfügeöffnung in der radialen Richtung des Statorkerns betrachtet verschließt.

Die US 2014/201979 A1 betrifft eine Herstellungsvorrichtung für einen Stator einer rotierenden elektrischen Maschine. Dabei umfasst der Stator einen ringförmigen Statorkern, der eine Vielzahl von Schlitzen aufweist, und eine an dem Statorkern angebrachte Spule. Jeder der Schlitze umfasst eine Öffnung, die sich in einem inneren Umfang des Statorkerns öffnet, und einen unteren Abschnitt, wobei die Schlitze in einem Schlitzabstand von einem benachbarten von den Schlitzen angeordnet sind. Der Schlitzabstand erhöht sich von der Öffnung in Richtung des unteren Abschnitts. Die Spule umfasst eine Vielzahl von geraden Abschnitten, die jeweils in die Schlitze eingeführt sind, sowie eine Vielzahl von Spulenenden, die fortlaufend mit den geraden Abschnitten sind. Die Herstellungsvorrichtung weist eine Bauvorrichtung mit einer Vielzahl von Haltenuten auf, in denen die geraden Abschnitte der Spule einführbar sind. Dabei umfasst jede der Haltenuten einen unteren Abschnitt und eine Öffnung wobei benachbarte Haltenuten in einem Abstand angeordnet sind, der der gleiche ist wie von den Öffnungen der benachbarten Schlitze in dem Statorkern. Die Bauvorrichtung ist an einer inneren Seite des Statorkerns anordbar, wenn die Haltenuten jeweils den Öffnungen der Schlitze zugewandt sind. Eine Stützeinheit, stützt den Statorkern und die an der inneren Seite des Statorkerns angeordnete Bauvorrichtung in einem konzentrischen Zustand. Eine Vielzahl von Verbindungsmechanismen, die in der Bauvorrichtung vorgesehen sind, weisen jeweils ein Drückelement und eine Verbindung auf, wobei das Drückelement näher an dem unteren Abschnitt jeder Haltenut anordbar ist als der in der Haltenut eingeführte gerade Abschnitt. Die Verbindung ist an einer äußeren Seite einer Endfläche des Statorkerns in einer axialen Richtung und an einer inneren Seite in einer radialen Richtung des Statorkerns von dem Drückelement angeordnet. Die Verbindung bewegt das entsprechende Drückelement in eine Richtung von dem unteren Abschnitt der Haltenut in Richtung des entsprechenden Schlitzes und von dem Schlitz in Richtung des unteren Abschnitts. Eine Vielzahl von Drückeinheiten bringt gleichzeitig eine Drückkraft von der axialen Richtung des Statorkerns auf allen von den Spulenenden der Spule synchron mit dem Verbindungsmechanismus auf, wenn die geraden Abschnitte jeweils in die Haltenuten der mittels der Stützeinheit gestützten Bauvorrichtung eingeführt werden und die Spulenenden jeweils nach außen in die axiale Richtung des Statorkerns von einer Endfläche des Abschnitts hervorstehen, der die Haltenuten der Bauvorrichtung enthält.

Sowohl die Formung der dreidimensionalen Formspulen als auch deren Montage in dem Stator der elektrischen Maschine erfordern nachteilig einen hohen Fertigungs- und Zeitaufwand.

Es ist daher eine Aufgabe der Erfindung, ein geeignetes Werkzeug anzugeben, welches eine aufwandsgeringere Formung und Montage ermöglichen. Diese Aufgabe wird durch die Merkmale des unabhängigen Patentanspruches 1 gelöst. Weiterbildungen sind jeweiligen abhängigen Patentansprüchen entnehmbar.

Ein erster Aspekt der Erfindung betrifft ein Werkzeug zum Formen und Einbringen von Spulen in einen Stator einer elektrischen rotierenden Maschine, wobei der Stator einen Statorkern aufweist, dessen zylindrischer Statorinnenraum einer Aufnahme eines um eine Rotationsachse drehbaren Rotors der Maschine dient und an dessen radialen Innenseite Statornuten zur Aufnahme erster und zweiter Spulenseiten einer Mehrzahl Spulen ausgebildet sind, und wobei das Werkzeug zumindest aufweist:
- einen zylindrischen Werkzeugkörper, welcher in dem Statorinnenraum anordenbar und relativ zu dem Stator um die Rotationsachse drehbar ist, und
- eine Mehrzahl äußere Werkzeugnuten, welche an einer radialen Außenseite des Werkzeugkörpers angeordnet und jeweils ausgestaltet sind, eine zweite Spulenseite einer Spule aufzunehmen,
   wobei
- die äußeren Werkzeugnuten ferner jeweils ausgestaltet sind, die zweite Spulenseite in einer bezüglich der Rotationsachse ersten Position des Werkzeugkörpers relativ zu dem Stator aufzunehmen, wobei eine erste Spulenseite der Spule in einer Statornut verbleibt,
- der Werkzeugkörper ferner ausgestaltet ist, eine Drehung von der ersten Position zu einer bezüglich der Rotationsachse zweiten Position relativ zu dem Stator auszuführen, um die erste und zweite Spulenseiten jeweils verbindende Spulenköpfe der Spulen zu formen.

Erfindungsgemäß ist die Mehrzahl äußere Werkzeugnuten ausgestaltet, zumindest ein innerhalb der äußeren Werkzeugnut in radialer Richtung bewegbares erstes Werkzeugteil sowie radial oberhalb des zumindest einen ersten Werkzeugteils eine zweite Spulenseite einer Spule aufzunehmen, und die ersten Werkzeugteile sind ferner jeweils ausgestaltet, in der zweiten Position mittels einer Bewegung in radialer Richtung die zweite Spulenseite der Spule in eine Statornut einzubringen.

Die Anzahl erste Werkzeugteile kann der Anzahl äußere Werkzeugnuten entsprechen, wenn jede zweite Spulenseite mittels eines einzigen ersten Werkzeugteils in die Statornut eingebracht wird. Alternativ kann die Anzahl erste Werkzeugteile auch dem Doppelten der Anzahl äußere Werkzeugnuten entsprechen, wenn in jeder äußeren Werkzeugnut zwei erste Werkzeugteile, vorzugsweise jeweils im Bereich einer Stirnseite des Werkzeugkörpers angeordnet sind. Die ersten Werkzeugteile einer äußeren Werkzeugnut können gleichzeitig oder sequenziell bewegt werden. Eine Länge des ersten Werkzeugteils bzw. der ersten Werkzeugteile kann dabei beispielsweise weitgehend der Länge der äußeren Werkzeugnut entsprechen, wodurch vorteilhaft eine gleichmäßige Ausbringung der zweiten Spulenseite aus der äußeren Werkzeugnut erzielt werden kann.

Erfindungsgemäß weist das Werkzeug ferner innere Werkzeugnuten auf, welche radial unterhalb der äußeren Werkzeugnuten in dem Werkzeugkörper angeordnet sind, und eine Mehrzahl zweite Werkzeugteile, welche in den inneren Werkzeugnuten bewegbar angeordnet sind, wobei die ersten und zweiten Werkzeugteile jeweils ausgestaltet sind, mittels einer Bewegung des zweiten Werkzeugteils die Bewegung des ersten Werkzeugteils in der äußeren Werkzeugnut in radialer Richtung zu bewirken, wobei die zweiten Werkzeugteile insbesondere von zumindest einer Stirnseite des Werkzeugkörpers aus bewegbar sind.

Vorzugsweise entspricht die Anzahl innere Werkzeugnuten der Anzahl äußere Werkzeugnuten, sodass radial unterhalb jeder äußeren Werkzeugnut eine jeweilige innere Werkzeugnut angeordnet ist. Alternativ kann jedoch eine geringere Anzahl innere Werkzeugnuten als äußere Werkzeugnuten vorgesehen sein, wobei eine innere Werkzeugnut radial unterhalb mehrerer äußerer Werkzeugnuten angeordnet ist und jedes zweite Werkzeugteil somit erste Werkzeugteile in mehreren äußeren Werkzeugnuten bewegt.

Eine Länge des Werkzeugkörpers bzw. der äußeren Werkzeugnuten in axialer Richtung entspricht vorzugsweise zumindest der Länge des Statorkerns bzw. der Statornuten. Hierdurch wird verhindert, dass die zweiten Spulenseiten während des Formens der Spulenköpfe derart verformt werden, dass diese in dem nachfolgenden Schritt nicht mehr in die Statornuten eingebracht werden können.

Ein Luftspalt zwischen der radialen Außenseite des Werkzeugkörpers und der radialen Innenseite des Statorkerns bzw. zwischen den Nutöffnungen der äußeren Werkzeugnuten und den Nutöffnungen der Statornuten ist vorzugsweise derart bemessen, dass einerseits das Werkzeug einfach und sicher in dem Stator angeordnet werden kann, andererseits ein Formen der Spulenköpfe und nachfolgendes Einbringen der zweiten Spulenseiten in die Statornuten durch das Werkzeug ermöglicht wird. Vorzugsweise wird bei der Anordnung des Werkzeugs in dem Statorinnenraum sichergestellt, dass der Luftspalt konstant bzw. nahezu konstant über den gesamten Umfang ist.

Der Werkzeugkörper weist beispielsweise eine um die Rotationsachse symmetrisch und radial unterhalb der inneren Werkzeugnuten angeordnete zylindrische Durchführung auf, welche der Aufnahme einer Werkzeugwelle zur drehfesten oder drehbaren Lagerung des Werkzeugkörpers dient. Alternativ kann anstelle einer Durchführung jedoch an einer Stirnseite oder an beiden Stirnseiten des Werkzeugkörpers ein Zapfen aus dem Werkzeugkörpermaterial ausgebildet oder daran befestigt sein, welcher bzw. welche geeignet gelagert werden, um eine Drehung des Werkzeugkörpers um die Rotationsachse zu ermöglichen.

Erfindungsgemäß weisen die ersten Werkzeugteile jeweils zumindest eine Finne und die zweiten Werkzeugteile jeweils zumindest einen Einschnitt auf, wobei die Finne und der Einschnitt ausgestaltet sind, dass eine Bewegung des zweiten Werkzeugteils in axialer Richtung die Bewegung des ersten Werkzeugteils in radialer Richtung bewirkt.

Beispielsweise weisen die Finne und der Einschnitt an aneinander liegenden Flanken bzw. Seiten jeweils eine bestimmte Steigung relativ zu der Rotationsachse auf, sodass eine Bewegung des zweiten Werkzeugteils in axialer Richtung ausschließlich eine Bewegung des ersten Werkzeugteils in radialer Richtung bewirkt.

Gemäß einer Weiterbildung des Werkzeugs ist in dem Werkzeugkörper zwischen einer äußeren Werkzeugnut und einer inneren Werkzeugnut ein Steg angeordnet, wobei der Steg zumindest eine Öffnung aufweist, welche die äußere Werkzeugnut mit der inneren Werkzeugnut räumlich verbindet, und ist die Finne des ersten Werkzeugteils ausgestaltet, durch die Öffnung hindurch in die innere Werkzeugnut zu ragen.

Gemäß dieser Weiterbildung ist die äußere Werkzeugnut durch einen sich insbesondere über die gesamte Länge des Werkzeugkörpers erstreckenden Steg, insbesondere aus dem Werkzeugkörpermaterial, von der inneren Werkzeugnut räumlich getrennt. Diese durch den Steg entstehende räumliche Trennung wird nach dieser Weiterbildung durch eine Anzahl Öffnungen aufgehoben, welche die Interaktion der ersten und zweiten Werkzeugteile ermöglichen. Über die Länge des Werkzeugkörpers können eine oder mehrere Öffnungen zwischen der äußeren Werkzeugnut und der inneren Werkzeugnut vorgesehen sein. Sofern der Steg eine die gesamte Länge umfassende Öffnung aufweist, beispielsweise wenn anstelle eines sich über die gesamte Breite der Werkzeugnut erstreckenden Stegs nur eine Verjüngung der Werkzeugnut vorgesehen ist, können die äußere und die innere Werkzeugnut auch einen gemeinsamen Raum bilden, dessen Teilbereiche allein durch die Anordnung der ersten und zweiten Werkzeugteile definiert sind.

Aufgrund des Stegs ist die innere Werkzeugnut nicht bzw. nur über die Öffnungen von radial außen zugänglich. Das zweite Werkzeugteil ist daher beispielsweise derart ausgestaltet, dass es von einer Stirnseite des Werkzeugkörpers aus in die innere Werkzeugnut eingebracht sowie, wie vorstehend beschrieben, von der Stirnseite aus bewegt werden kann. Der bzw. die Einschnitte des zweiten Werkzeugteils sind entsprechend derart ausgestaltet, dass sie nicht in die Öffnung hineinragt, sondern eine geringere Höhe in radialer Richtung als die innere Werkzeugnut aufweist. Insbesondere können eine Finne des ersten und ein Einschnitt des zweiten Werkzeugteils nach deren Einbringen in die äußere und innere Werkzeugnuten derart ineinandergreifen, dass ein Entfernen des zweiten Werkzeugteils aus der inneren Werkzeugnut erst nach Entfernen des ersten Werkzeugteils aus der äußeren Werkzeugnut möglich ist. In der Grundkonfiguration vor dem Einbringen in den Stator sind die äußeren und inneren Werkzeugnuten des Werkzeugkörpers vorzugsweise bereits vollständig mit ersten und zweiten Werkzeugteilen bestückt.

Ein zweiter Aspekt der Erfindung betrifft schließlich eine Verwendung eines erfindungsgemäßen Werkzeugs zum Einbringen und Formen von Spulen in einem Stator einer elektrischen rotierenden Maschine.

Die Verwendung des Werkzeugs betrifft ein Verfahren zum Formen und Einbringen von Spulen in einen Stator einer elektrischen rotierenden Maschine, wobei der Stator einen Statorkern zur Aufnahme eines um eine Rotationsachse drehbaren Rotors in einem zylindrischen Statorinnenraum aufweist, und wobei der Statorkern an seiner radialen Innenseite eine Mehrzahl Statornuten zur Aufnahme einer Mehrzahl Spulen aufweist, mit zumindest folgenden Schritten:
a) Formen der Spulen in eine jeweilige Grundform, wobei die Grundform eine erste Spulenseite und eine zweite Spulenseite aufweist, deren Enden durch einen jeweiligen Spulenkopf miteinander verbunden sind, und wobei die Spulenseiten parallel in einer Ebene angeordnet sind,
b) Bestücken der Statornuten mit den Spulen, wobei in die Statornuten jeweils erste und zweite Spulenseiten einer gleichen Spule eingebracht werden,
c) Anordnen eines Werkzeugs in dem Statorinnenraum, wobei das Werkzeug einen zylindrischen Werkzeugkörper mit einer der Mehrzahl Spulen entsprechenden Mehrzahl äußere Werkzeugnuten aufweist, in welchen die zweiten Spulenseiten anordenbar sind, und wobei das Werkzeug relativ zu dem Stator um die Rotationsachse drehbar ist,
d) Einbringen, in einer bezüglich der Rotationsachse ersten Position, der zweiten Spulenseiten in die äußeren Werkzeugnuten, wobei die ersten Spulenseiten in den Statornuten verbleiben,
e) Ausführen einer Drehbewegung des Werkzeugkörpers relativ zu dem Stator um die Rotationsachse, wodurch die Spulenköpfe geformt werden, und
f) Einbringen, in einer bezüglich der Rotationsachse zweiten Position, der zweiten Spulenseiten in die Statornuten (STN) mittels des Werkzeugs.

Dabei werden die Spulen für den Stator der elektrischen Maschine somit zunächst in eine zweidimensionale Grundform geformt. Diese Formung erfolgt insbesondere entsprechend dem einleitend beschriebenen ersten Formungsschritt für Formspulen. Als Grundform der Spule wird jedoch keine einleitend genannte ovale Form, bei welcher die Spulenseiten entsprechend dem doppelten Radius der Spulenköpfe voneinander beabstandet sind, wenn diese als Halbkreisbögen ausgeführt sind, gewählt. Vielmehr werden die Spulenköpfe einer Spule vorzugsweise derart gekröpft, dass die Spulenseiten zumindest auf der Länge, welche nachfolgend in eine Statornut eingebracht wird, einen nur geringen und einheitlichen Abstand zueinander aufweisen. Dieser geringe Abstand von beispielsweise wenigen Millimeter ist derart bemessen, dass einerseits in Schritt b) beide Spulenseiten vollständig bzw. nahezu vollständig in die Statornut eingebracht werden können, andererseits in Schritt d) ein Luftspalt zwischen der radialen Innenseite des Statorkerns und der radialen Außenseite des Werkzeugkörpers überbrückt wird, d.h. möglichst weder die erste noch die zweite Spulenseite in den Luftspalt hineinragt. Letzteres verhindert vorteilhaft, dass es während der Drehbewegung in Schritt e) zu einem möglichen Schleifen der zweiten Spulenseite an der Innenseite des Statorkerns bzw. der ersten Spulenseite an der Außenseite des Werkzeugkörpers kommt, wodurch eine Isolierung der Spule oder die Spule selbst beschädigt werden könnte, oder sich eine Spulenseite im Bereich des Luftspalts verkanten und damit die Drehbewegung nicht abgeschlossen werden könnte.

Die beiden Spulenseiten der derart geformten Spule werden in dem Schritt b) durch beispielsweise eine Montagefachkraft in eine Statornut eingebracht bzw. eingelegt. Die Statornut kann dabei beispielsweise mit einer Nutisolierung aus einem Aramidpapier ausgekleidet oder mit einer elektrisch isolierenden Lackschicht versehen sein. Dabei wird die erste Spulenseite in dem Nutgrund der Statornut, d.h. im radial inneren Bereich der Statornut, angeordnet, während die zweite Spulenseite in dem radial äußeren Bereich der Statornut bzw. im Bereich der Nutöffnung angeordnet wird.

Das erfindungsgemäße Werkzeug wird nun in dem Schritt c) in dem Statorinnenraum, welcher in radialer Richtung durch die radiale Innenseite des Statorkerns sowie in axialer Richtung durch die Stirnseiten begrenzt ist, angeordnet. Dies erfolgt beispielsweise durch Einführen des Werkzeugs von einer Stirnseite des Stators. Nach Anordnung des Werkzeugs in dem Statorinnenraum wird das Werkzeug vorzugsweise derart ausgerichtet, dass einerseits ein möglichst einheitlicher Luftspalt über den gesamten Umfang des Werkzeugkörpers existiert, andererseits eine äußere Werkzeugnut einer jeweiligen Statornut axial direkt gegenüber liegt.

Im Anschluss an die Ausrichtung werden in Schritt d) die zweiten Spulenseiten in die äußeren Werkzeugnuten des Werkzeugs eingebracht. Dies erfolgt durch Bewegen der Spulen in radialer Richtung in den Statornuten beispielsweise durch die Montagefachkraft oder automatisiert, wobei die hierfür erforderliche Kraft beispielsweise an den Spulenköpfen aufgebracht werden kann. Bei der Bewegung werden beide Spulenseiten der Spule parallel bewegt, sodass der Abstand zwischen diesen unverändert bleibt. Die Spulen werden entsprechend soweit in radialer Richtung bewegt, bis die zweiten Spulenseiten vollständig in die äußeren Werkzeugnuten eingebracht sind und nicht in den Luftspalt hineinragen. In dieser radialen Position der Spulen überbrückt der Abstand zwischen den Spulenseiten den Luftspalt zwischen dem Stator und dem Werkzeugkörper, sodass der nachfolgende Schritt e) durchgeführt werden kann, ohne die Spulenseiten bzw. deren Isolierungen zu beschädigen.

Die Drehbewegung des Werkzeugs relativ zu dem Stator in Schritt e), welche mittels einer Drehung des Werkzeugkörpers und/oder des Stators erfolgen kann, resultiert vorteilhaft in einer gleichzeitigen und gleichmäßigen Formung der Spulenköpfe aller Spulen. Die relative Drehung erfolgt dabei um einen bestimmten Winkel, welcher der Differenz zwischen der ersten rotatorischen Position und der zweiten rotatorischen Position bzw. dem gewünschten Nutsprung, d.h. dem Abstand der Statornuten, in denen die Spulenseiten einer Spule schließlich angeordnet sind, entspricht.

In Schritt f) werden schließlich in der zweiten rotatorischen Position alle zweiten Spulenseiten der Spulen in die Statornuten mittels des Werkzeugs eingebracht. Das Werkzeug dient somit ergänzend dazu, die zweiten Spulenseiten aus den äußeren Werkzeugnuten auszubringen und in die Statornuten einzubringen. Die von dem Werkzeug verursachte Bewegung der zweiten Spulenseiten in radialer Richtung führt zu einer weiteren Formung der Spulenköpfe, welche entgegen dem Einbringen der zweiten Spulenseiten in die äußeren Werkzeugnuten in Schritt d) für die Montagefachkraft nicht manuell ausführbar wäre. Durch Einsatz des erfindungsgemäßen Werkzeugs wird der bislang für jede Spule gesondert durchzuführende zweite Formungsschritt, d.h. das Umformen der zweidimensionalen Spule in eine dreidimensionale Spule, somit durch zwei für alle Spulen gemeinsame und gleichzeitige Schritte ersetzt, wodurch der für die dreidimensionale Formung der Spulen erforderliche Aufwand vorteilhaft deutlich reduziert wird.

Die äußeren Werkzeugnuten des Werkzeugs weisen jeweils eine Tiefe in radialer Richtung auf, die derart bemessen ist, dass die zweite Spulenseite vollständig in dieser angeordnet werden kann. Vorzugsweise ist diese Tiefe jedoch derart bemessen, dass die zweite Spulenseite im Bereich der Nutöffnung der äußeren Werkzeugnut angeordnet ist, wodurch der erforderliche Hub der Bewegung zum Einbringen der zweiten Spulenseite in die Statornut in Schritt f) minimiert werden kann.

Eine Länge der Spulenseiten der jeweiligen Spule entspricht vorzugsweise zumindest der Länge des Statorkerns in axialer Richtung. Eine Länge des Werkzeugs in axialer Richtung entspricht vorzugsweise ebenfalls zumindest der Länge des Statorkerns, wodurch vorteilhaft verhindert wird, dass es bei der Formung der Spulenköpfe in Schritt e) aufgrund der relativen Drehbewegung zu einer Verformung eines Teils der zweiten Spulenseite kommt, welche im nachfolgenden Schritt f) ein Einbringen der zweiten Spulenseite in die zweite Statornut verhindern könnte.

Die Anzahl äußere Werkzeugnuten des Werkzeugs entspricht vorzugsweise der Anzahl Statornuten, sodass nach Schritt f) des Verfahrens in jeder Statornut Spulenseiten von zwei unterschiedlichen Spulen angeordnet sind, speziell eine erste Spulenseite einer ersten Spule radial unterhalb einer zweiten Spulenseite einer zweiten Spule in einer Statornut angeordnet ist.

Des Weiteren weist das Werkzeug ferner eine Mehrzahl erste Werkzeugteile, welche in den äußeren Werkzeugnuten jeweils radial unterhalb einer zweiten Spulenseite bewegbar angeordnet sind, eine Mehrzahl innere Werkzeugnuten, welche radial unterhalb der äußeren Werkzeugnuten in dem Werkzeugkörper angeordnet sind, und eine Mehrzahl zweite Werkzeugteile, welche in den inneren Werkzeugnuten jeweils bewegbar angeordnet sind, auf. Dabei wird in Schritt f) von den zweiten Werkzeugteilen eine Bewegung ausgeführt, welche eine Bewegung der ersten Werkzeugteile in radialer Richtung bewirkt, wodurch die zweite Spulenseiten in die Statornuten eingebracht werden.

Des Weiteren werden in Schritt f) die zweiten Spulenseiten gleichzeitig oder nacheinander, insbesondere aufgeteilt in Gruppen einer jeweiligen Mehrzahl Spulen, in die Statornuten eingebracht.

Insbesondere ein gleichzeitiges Einbringen aller zweiten Spulenseiten ermöglicht ein vorteilhaftes Beschleunigen des Verfahrens, wobei hierfür entsprechend alle zweiten Werkzeugteile in den inneren Werkzeugnuten gleichzeitig bewegt werden müssen.

Des Weiteren werden die Spulen jeweils aus zumindest einer Windung eines Flachdrahts in die Grundform geformt, wobei der Flachdraht insbesondere eine Querschnittsfläche im Bereich zwischen einschließlich 4 mm² und einschließlich 30mm² aufweist. Eine Spulenseite kann entsprechend insbesondere eine Querschnittsfläche zwischen einschließlich 50mm² bis 300m² aufweisen.

Für Spulen von elektrischen Maschinen im einleitend genannten Bereich der Nennleistung verwendete Flachdrähte mit einer solchen Querschnittsfläche erfordern hohe Kräfte für die Formung der Spulenköpfe, weshalb diese bislang zunächst außerhalb des Stators in die dreidimensionale Form geformt und erst nach Formung in die Statornuten eingebracht wurden. Mittels des erfindungsgemäßen Werkzeugs können die Spulenköpfe in den Schritten e) und f) nunmehr vorteilhaft gleichzeitig sowie zudem gleichmäßig geformt werden.

Die Spulen werden des Weiteren vor dem Schritt a), während des Schritts a), oder nach dem Schritt a) und vor dem Schritt b) mit einem Isoliermaterial, insbesondere mit einem folienartigen Isoliermaterial, umwickelt.

Die Umwicklung der Spule mit einem Isoliermaterial dient einerseits der elektrischen Isolierung, welche insbesondere dann erforderlich ist, wenn Spulenseiten verschiedener Spulen in eine Statornut eingebracht werden, andererseits einer Wärmeabfuhr der sich während des Betriebs der elektrischen Maschine aufgrund des Stromflusses erwärmenden Spulen in den Stator, welcher in bekannter Weise aktiv oder passiv gekühlt wird. Vorzugsweise werden dabei auch die Spulenköpfe vollständig mit einem Isoliermaterial umwickelt, bevor die Spulenköpfe in Schritt e) und f) geformt werden und dann nur noch schwer zugänglich sind.

Des Weiteren werden die Spulen in Schritt a) derart geformt, dass deren Spulenköpfe nach Schritt b) in radialer Richtung vollständig außerhalb des Statorinnenraums liegen.

Die Spulenköpfe der Spulen werden in der Grundform somit derart geformt, dass diese nach der Bestückung in den Statornuten nicht über die zweiten Spulenseiten in radialer Richtung hinausragen. Hierdurch wird ermöglicht, das Werkzeug über eine Stirnseite in den Statorinnenraum einzuführen.

Ausführungsbeispiele der Erfindung werden bezugnehmend auf Figuren näher erläutert. Dabei zeigen:
- FIG 1: einen mit Spulen bestückten Stator einer elektrischen rotierenden Maschinen in einer perspektivischen Ansicht,
- FIG 2: Grundformen einer Spule,
- FIG 3: den Stator nach der FIG 1 mit darin angeordnetem erfindungsgemäßen Werkzeug,
- FIG 4: den Stator und das Werkzeug nach der FIG 3 mit in äußere Werkzeugnuten eingebrachte zweite Spulenseiten,
- FIG 5: das Werkzeug in einer Schnittdarstellung in einem ersten Zustand,
- FIG 6: das Werkzeug nach der FIG 5 in dem ersten Zustand mit einer zweiten Spulenseite in der äußeren Werkzeugnut, und
- FIG 7: das Werkzeug nach der FIG 5 in einem zweiten Zustand.

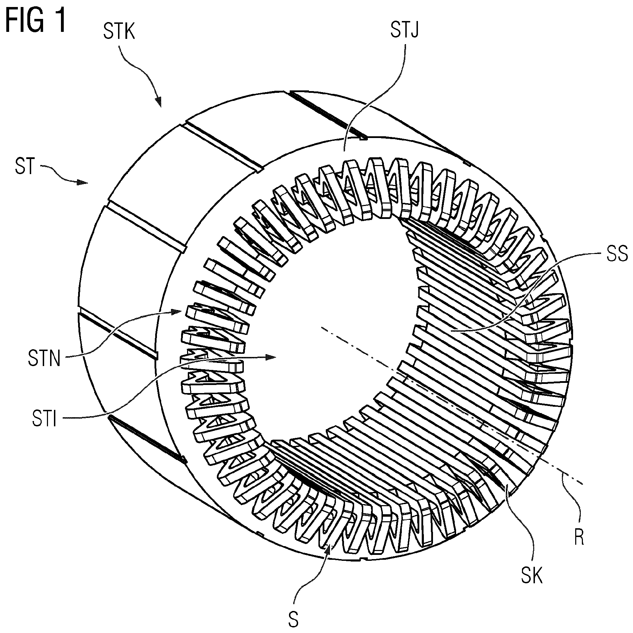

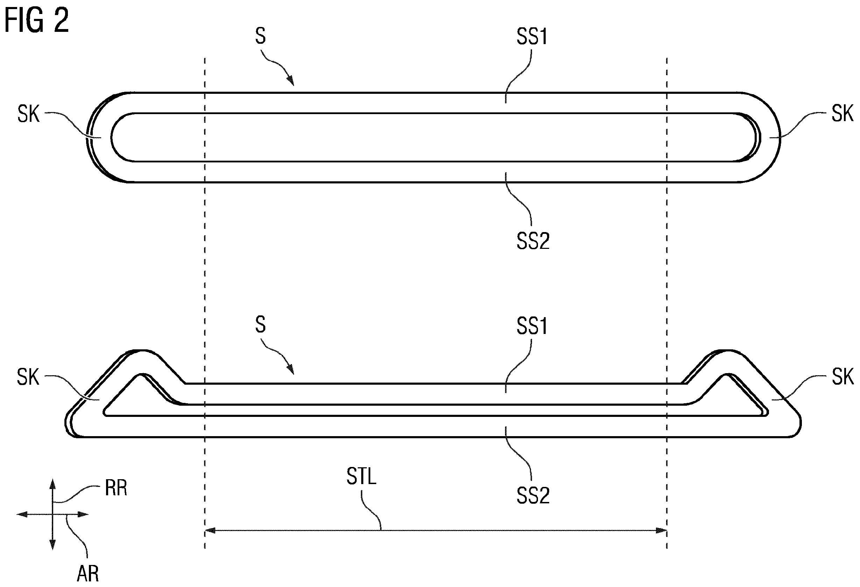

FIG 1 zeigt in einer perspektivischen Ansicht einen beispielhaften Stator ST einer elektrischen rotierenden Maschine. Der Stator ST ist als ein so genannter Außenstator mit einem Statorkern STK aus einem geschichteten Blechpaket verwirklicht, in dessen Statorinnenraum STI ein um eine Rotationsachse R drehbarer Rotor der Maschine anordenbar ist. Der zylindrische Statorinnenraum STI ist in radialer Richtung durch eine Mehrzahl in Umfangrichtung angeordnete Statorzähne sowie in axialer Richtung durch Stirnflächen des Stators ST begrenzt. Die Statorzähne sind ausgehend von einem zylindrischen Statorjoch STJ in radialer Richtung ausgebildet und bilden eine entsprechende Mehrzahl Statornuten STN aus. Die Statornuten STN besitzen über die Länge des Statorinnenraums STI eine grundsätzlich einheitliche Breite in Umfangrichtung sowie eine einheitliche Tiefe in radialer Richtung, wobei sie im Bereich der Nutöffnungen zwischen den Statorzahnköpfen sowie im Bereich der Stirnflächen des Stators ST vollständig offen sind, sodass Spulen S bzw. Spulenseiten SS in radialer Richtung in diese einbringbar sind. Die Tiefe der Statornuten STN ist derart bemessen, dass jeweils zwei Spulenseiten SS übereinander liegend darin angeordnet werden können. In dem Beispiel der FIG 1 sind in die Statornuten STN bereits vorgeformte Spulen S bzw. Spulenseiten SS eingebracht, wie sie nachfolgend zu FIG 2 beschrieben werden.

FIG 2 zeigt im oberen Bereich schematisch eine Spule S in einer beispielhaften Grundform. Die Grundform entspricht dabei einem zweidimensionalen Oval mit zwei parallelen Geradenstücken als Spulenseiten SS und zwei die Geradenstücke verbindenden Kreisbögen in einer Ebene. Ergänzend weist die Spule S einen Spulenanschluss auf, welcher üblicherweise im Bereich eines der beiden Spulenköpfe SK angeordnet, in der FIG 2 jedoch nicht gesondert dargestellt ist. Beide Spulenseiten SS1, SS2 bzw. deren Geradenstücke besitzen eine größere Länge als die Länge STL des Stators ST bzw. der Statornuten STN in axialer Richtung und ragen somit jeweils teilweise über die Stirnseiten des Stators ST hinaus. Die den Stator ST überragenden Teile der Spulenseiten SS1, SS2 sowie die diese verbindenden Kreisbögen bilden Spulenköpfe SK. Die Länge der Spulenköpfe SK ist vorzugsweise derart bemessen, dass einerseits die Spulenseiten SS1, SS2 in voneinander beabstandete unterschiedliche Statornuten eingebracht werden können, und dass andererseits die Spulenköpfe SK nach dem Einbringen der Spulen S in die Statornuten STN einen möglichst geringen Überstand in axialer Richtung aufweisen, um die axiale Länge der elektrischen Maschine zu begrenzen.

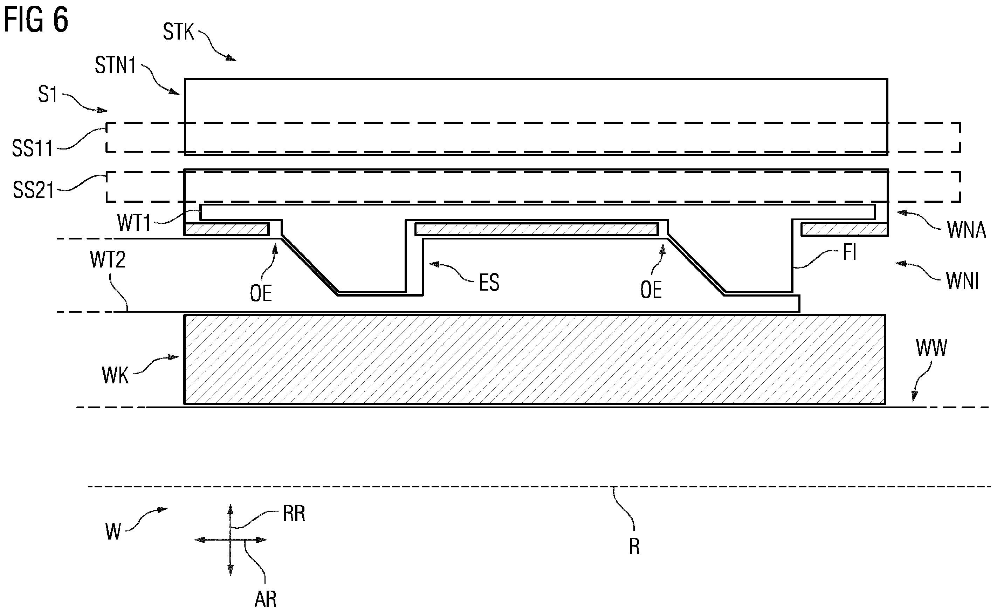

Im unteren Bereich zeigt die FIG 2 beispielhaft schematisch eine alternative zweidimensionale Grundform der Spule S, wie sie in den Statornuten STN der FIG 1 jeweils eingebracht ist. Diese alternative Grundform kann insbesondere aus der oberen Grundform geformt werden. Im Unterschied zu der erläuterten ovalen Form weisen die Spulenseiten SS1, SS2 in dieser alternativen Grundform zumindest über die Länge STL des Stators ST einen geringeren Abstand zueinander auf. Dieser beispielsweise nur wenige Millimeter betragende Abstand ist dabei derart bemessen, dass einerseits die beiden Spulenseiten SS1, SS2 einer Spule S vollständig bzw. nahezu vollständig in eine Statornut STN eingebracht werden können, sodass nur höchstens ein geringer Teil der zweiten Spulenseite SS2 in radialer Richtung RR in den Statorinnenraum STI ragt. Andererseits ist der Abstand hinreichend groß, um einen Luftspalt LS zwischen der radialen Innenseite des Statorkerns STK und einer radialen Außenseite eines in den Statorinnenraum STI eingebrachten Werkzeugkörpers WK zu überbrücken, wie in FIG 6 beispielhaft dargestellt ist. Die Spulenköpfe SK sind zudem derart geformt, dass sie in radialer Richtung RR nicht über die zweite Spulenseite SS2 hinausragen. Wie aus FIG 1 ersichtlich ist, bleibt hierdurch der Statorinnenraum STI über die Stirnseiten vollständig von außen zugänglich, wodurch das Einführen des Werkzeugs W auch nach Einbringen der Spulen S in die Statornuten STN ermöglicht wird.

Die alternative Grundform der Spule S wird beispielsweise durch geeignetes Kröpfen bzw. Stauchen der Spulenköpfe SK erzielt, wobei während dieses Formungsprozesses darauf geachtet werden muss, dass elektrische Leiter oder eine Isolierung, sofern diese bereits aufgebracht wurde, nicht beschädigt werden. Vorzugsweise sind die Radien der im Vergleich zu der ovalen Form zusätzlichen Biegungen derart gewählt, dass eine solche Beschädigung vermieden wird. Für eine elektrische Isolierung und einen mechanischen Schutz wird die Spule S in der Grundform bzw. bereits vor dem Formen in die Grundform beispielsweise mit mindestens einer Lage eines Glimmerbands sowie ergänzend mit einer oder mehreren Lagen eines Gewebebands vollständig umwickelt.

Die umwickelten Spulen S werden beispielsweise durch eine Montagefachkraft oder automatisiert in die Statornuten STN eingebracht, wobei die Spulen S jeweils derart angeordnet sind, dass die erste Spulenseite SS1 im Bereich des Nutgrunds der Statornut STN angeordnet ist, während die zweite Spulenseite SS2 im Bereich der Nutöffnung an der radialen Innenseite des Statorkerns STK angeordnet ist. Die zweidimensionalen Spulen S weisen in der alternativen Grundform somit eine Ausrichtung in axialer AR sowie in radialer Richtung RR auf.

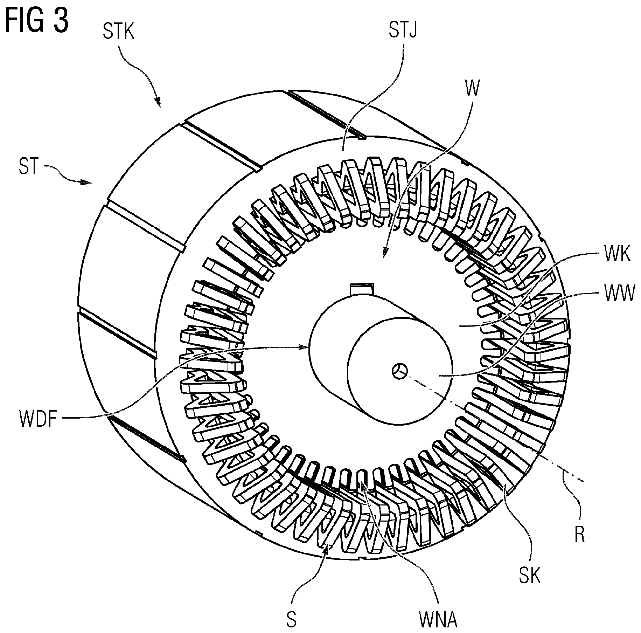

FIG 3 zeigt den mit Spulen S bestückten Statorkern STK der FIG 1 in einem Zustand nach dem nachfolgenden Schritt des Einführens eines erfindungsgemäßen Werkzeugs W in den Statorinnenraum STI, wobei das Werkzeug W beispielsweise von einer Montagefachkraft oder automatisiert über die in der Figur sichtbare vordere Stirnseite in den Statorinnenraum STI eingeführt wurde. Das Werkzeug W weist einen zylindrischen Werkzeugkörper WK auf, welcher beispielsweise aus einem massiven Körper aus Metall oder einer Metalllegierung durch maschinelle Bearbeitung geformt ist. Alternativ kann der Werkzeugkörper WK entsprechend dem Statorkern aus einem Blechpaket bestehen, wobei die Ausprägungen in dem Querschnitt des Blechpakets durch Stanzen der Bleche verwirklicht werden. Die Länge des Werkzeugkörpers WK entspricht zumindest der Länge STL des Statorkerns STK, vorzugsweise überragt der Werkzeugkörper WK den Statorkern STK jedoch an jeder Stirnseite um beispielsweise einige Millimeter. Der Außendurchmesser des Werkzeugkörpers WK ist beispielsweise einige Millimeter kleiner als der Innendurchmesser des Statorkerns STK, sodass nach Anordnen des Werkzeugs W in dem Statorinnenraum STI über den gesamten Umfang ein Luftspalt verbleibt.

Der Werkzeugkörper WK weist eine der Anzahl Statornuten entsprechende Anzahl äußere Werkzeugnuten WNA auf. Diese sind entsprechend den Statornuten über die gesamte Länge des Werkzeugkörpers WK einheitlich ausgebildet, d.h. besitzen eine einheitliche Breite in Umfangrichtung und eine einheitliche Tiefe in radialer Richtung. Insbesondere können die Werkzeugnuten WNA im Bereich der Stirnseiten des Werkzeugkörpers WK abgerundet sein, d.h. sich entsprechend einem bestimmten Radius weiten, um eine Beschädigung der zweiten Spulenseiten SS2 bzw. deren Isolierung während des Formungsschrittes zu vermeiden. Die Tiefe der äußeren Werkzeugnuten WNA ist derart bemessen, dass sowohl eine zweite Spulenseite SS2 als auch ein erstes Werkzeugteil übereinander liegend darin angeordnet werden können. Neben der Anzahl äußere Werkzeugnuten WNA weist der Werkzeugkörper WK ergänzend eine Anzahl innere Werkzeugnuten auf, die radial unterhalb der äußeren Werkzeugnuten angeordnet sind und jeweils ein zweites Werkzeugteil aufnehmen, in FIG 3 jedoch nicht speziell dargestellt sind. Die Anzahl innere Werkzeugnuten entspricht vorzugsweise der Anzahl äußere Werkzeugnuten WNA, alternativ kann jedoch auch eine geringere Anzahl innere Werkzeugnuten vorgesehen sein.

Der Werkzeugkörper WK der FIG 3 weist zudem eine zentrale zylindrische Durchführung WDF zur Aufnahme einer Werkzeugwelle WW auf. Die Werkzeugwelle WW dient einerseits der Lagerung des Werkzeugkörpers WK, andererseits ermöglicht sie eine rotatorische Bewegung bzw. eine Drehung des Werkzeugkörpers WK relativ zu dem Stator ST um die Rotationsachse R. Die drehbare Lagerung des Werkzeugkörpers WK kann dabei derart verwirklicht sein, dass der Werkzeugkörper WK drehbar auf einer starr aufgehängten Werkzeugwelle WW gelagert ist, oder dass der Werkzeugkörper WK drehfest mit einer drehbar gelagerten Werkzeugwelle WW verbunden ist. Alternativ zu einer Durchführung WDF und einer darin angeordneten Werkzeugwelle WW kann ebenso ein jeweiliger Zapfen an einer oder an beiden Stirnseiten des Werkzeugkörpers WK ausgebildet oder mit diesem mechanisch verbunden sein, welcher wiederum drehbar gelagert ist. Alternativ kann ebenso der Werkzeugkörper WK unbeweglich gelagert sein, während der Stator ST beweglich gelagert ist und entsprechend eine relative Drehung zu dem starren Werkzeugkörper WK ausführen kann. Auch eine drehbare Lagerung sowohl des Werkzeugkörpers WK als auch des Stators ST, welche in gleicher Weise eine relative Drehbewegung der beiden zueinander ermöglicht, ist denkbar.

Vor oder nach dem Einführen in den Statorinnenraum STI wird das Werkzeug W derart gegenüber dem Statorkern STK um die Rotationsachse R gedreht bzw. ausgerichtet, dass die Nutöffnungen der äußeren Werkzeugnuten WNA den Nutöffnungen der Statornuten STN direkt gegenüberliegen, sodass die zweiten Spulenseiten SS2 nachfolgend beschädigungsfrei in die äußeren Werkzeugnuten WNA eingebracht werden können. Die äußeren Werkzeugnuten WNA weisen beispielsweise eine Breite in Umfangrichtung auf, welche weitgehend der Breite der Statornuten STN entspricht. Üblicherweise ist die Breite der Statornuten STN derart dimensioniert, dass die Spulenseiten SS1, SS2 darin kein Spiel aufweisen, auch um eine möglichst optimale Wärmeabfuhr aus den Spulen S in den Statorkern STK während des Betriebs der elektrischen Maschine zu erzielen. Bei einer vorhandenen Nutisolation beispielsweise aus einem Aramidpapier ist deren Dicke entsprechend zu berücksichtigen. Da für die äußeren Werkzeugnuten WNA eine solche Nutisolation nicht erforderlich ist, kann bei einer identischen Breite ein ausreichendes Spiel bereitgestellt werden, welches vorteilhaft verhindert, dass die zweiten Spulenseiten SS2 bzw. deren Umwicklung während des Einbringens in die äußeren Werkzeugnuten WNA sowie des nachfolgenden Einbringens in die Statornuten STN beschädigt werden. Eine solche Beschädigung wäre insbesondere kritisch, da diese nach dem vollständigen Einbringen der Spulenseiten SS in die Statornuten STN praktisch nicht mehr erkennbar ist.

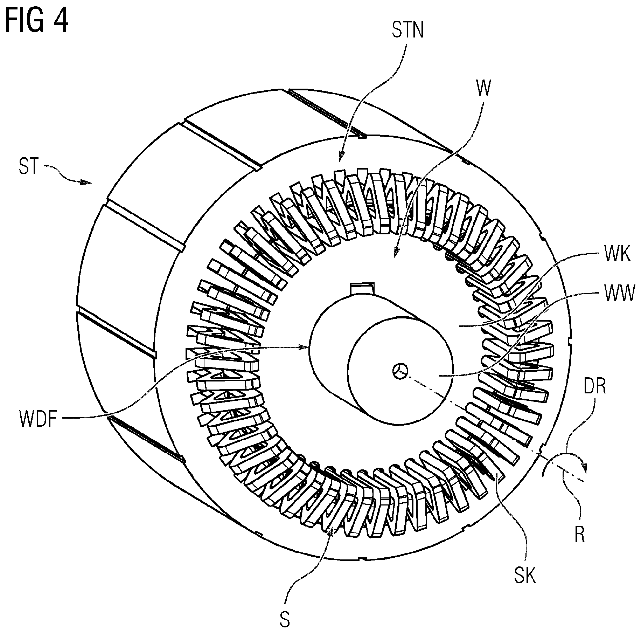

FIG 4 zeigt den Statorkern STK und das in dessen Statorinnenraum STI angeordnete Werkzeug W der FIG 3 in einem Zustand nach dem Schritt des Einbringens der zweiten Spulenseiten SS2 der Spulen S in die äußeren Werkzeugnuten WNA des Werkzeugkörpers WK. Das Einbringen der Spulen S erfolgt dabei beispielsweise wiederum durch eine Montagefachkraft oder automatisiert. Wie aus der FIG 4 ersichtlich ist, werden bei diesem Schritt nicht nur die zweiten Spulenseiten SS2 in radialer Richtung bewegt und damit in die äußeren Werkzeugnuten WNA eingebracht, sondern auch die ersten Spulenseiten SS1 in den Statornuten sowie die Spulenköpfe SK bewegt. Somit wird die Grundform der Spule S nicht verändert, insbesondere werden die Spulenseiten SS1, SS2 nicht gespreizt oder gestaucht, sodass der Abstand zwischen diesen konstant bleibt.

Ausgehend von dem in FIG 4 dargestellten Zustand des in dem Statorinnenraum STI angeordneten Werkzeugs W sowie in den äußeren Werkzeugnuten WNA angeordneten zweiten Spulenseiten SS2 und in den Statornuten STN verbleibenden ersten Spulenseiten SS1 werden nachfolgend die Spulenköpfe SK der Spulen S geformt. Dies erfolgt durch eine Drehbewegung des Werkzeugs W relativ zu dem Statorkern STK, wobei die Drehbewegung ausgeführt wird, um die äußeren Werkzeugnuten WNA des Werkzeugs W aus einer ersten rotatorischen Position, in welcher die zweiten Spulenseiten SS2 in die äußeren Werkzeugnuten WNA eingebracht wurden, in eine zweite rotatorischen Position zu bringen, in welcher die zweiten Spulenseiten SS2 nachfolgend in die Statornuten STN mittels des Werkzeugs W eingebracht werden. Auf diese Weise wird der so genannte Nutsprung zwischen den beiden Spulenseiten SS1, SS2, d.h. der räumliche Abstand der ersten Spulenseite SS1 zu der zweiten Spulenseite SS2 einer Spule S in Umfangrichtung des Statorkerns STK, verwirklicht.

Die relative Drehbewegung erfolgt beispielhaft durch eine Drehung des Werkzeugkörpers WK um die Rotationsachse R in der mittels eines Pfeils angegebenen Drehrichtung DR, während der Statorkern STK ortsfest ist. Dabei bewirkt die relative Drehbewegung nicht nur ein Auseinanderbewegen bzw. Spreizen der beiden Spulenseiten SS1, SS2 der jeweiligen Spule S, sondern auch ein dreidimensionales Formen der Spulenköpfe SK.

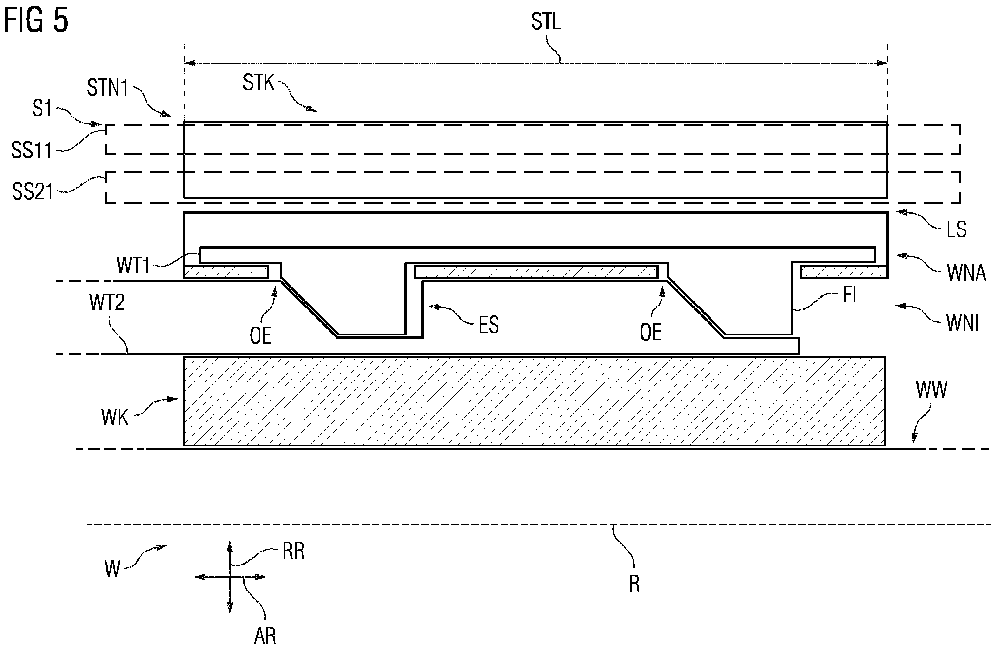

Nach der relativen Drehbewegung bzw. dem Formen der Spulenköpfe SK werden die zweiten Spulenseiten SS2 der Spulen S in die Statornuten STN eingebracht. Dies erfolgt durch Bewegen der zweiten Spulenseiten SS2 in radialer Richtung mittels des Werkzeugs W, wie nachfolgend zu den FIG 5 bis 7 näher erläutert wird. Gemeinsam mit den zweiten Spulenseiten SS2 werden auch die während der Drehbewegung im Bereich der Nutöffnungen der Statornuten STN angeordneten ersten Spulenseiten SS1 in Richtung des jeweiligen Nutgrunds bewegt. Der Betrag der Bewegung in radialer Richtung ist dabei derart bemessen, dass die ersten Spulenseiten SS1 in dem Nutgrund der Statornuten STN angeordnet sind und dass die zweiten Spulenseiten SS2 soweit in die Statornuten STN eingebracht werden, dass sie unmittelbar radial oberhalb einer ersten Spulenseiten SS1 angeordnet sind. Da in den Statornuten STN jeweils erste und zweite Spulenseiten SS1, SS2 unterschiedlicher Spulen S angeordnet sind, entspricht deren Annäherung keiner Stauchung der in der Grundform parallelen und beabstandeten Spulenseiten SS1, SS2 einer Spule S, sondern einem weiteren Teilschritt bei der dreidimensionalen Formung der Spulen S.

Nach dem Einbringen der zweiten Spulenseiten SS2 in die Statornuten STN kann das Werkzeug W über eine Stirnseite des Statorkerns STK wieder aus dem Statorinnenraum STI entfernt werden.

FIG 5, 6 und 7 zeigen jeweils eine schematische Schnittdarstellung des Aufbaus eines erfindungsgemäßen Werkzeugs W insbesondere zur Erläuterung des Einbringens der zweiten Spulenseite SS21 einer ersten Spule S1 aus einer ersten Statornut STN1 in eine äußere Werkzeugnut WNA des Werkzeugkörpers WK sowie des Ausbringens dieser zweiten Spulenseite SS21 aus der äußeren Werkzeugnut WNA des Werkzeugkörpers WK in eine andere, um einen gewünschten Nutsprung entfernt von der ersten Statornut STN1 angeordnete Statornut STNn mittels erster und zweiter Werkzeugteile WT1, WT2.

FIG 5 zeigt dabei einen Längsschnitt durch den Werkzeugkörper WK des Werkzeugs W entlang der zentralen Rotationsachse R, wobei der Schnitt mittig durch eine innere WNI und eine äußere Werkzeugnut WNA geht und lediglich der Bereich oberhalb der Rotationsachse R dargestellt ist. Radial oberhalb des Werkzeugkörpers WK bzw. der äußeren Werkzeugnut WNA und durch einen Luftspalt LS getrennt ist eine erste Statornut STN1 des Statorkerns STK ergänzend dargestellt, wobei ein Nutgrund im oberen Bereich der ersten Statornut STN1 angeordnet ist. Das Statorjoch des Statorkerns STK ist hingegen nicht gesondert dargestellt.

Das Werkzeug W weist einen zylindrischen Werkzeugkörper WK mit einem bestimmten Durchmesser und einer bestimmten Länge auf, welche an den Durchmesser des Statorinnenraums bzw. an die Länge STL des Statorkerns STK angepasst sind. Wie vorstehend bereits beschrieben, ist der Durchmesser des Werkzeugkörpers WK derart bemessen, dass die radiale Außenseite des Werkzeugkörpers WK und die radiale Innenseite des Statorkerns STK durch einen über den Umfang des Werkzeugkörpers WK bzw. des Statorkerns STK konstanten bzw. nahezu konstanten Luftspalt LS voneinander beabstandet sind, während die Länge des Werkzeugkörpers WK bzw. der äußeren Werkzeugnuten WNA zumindest der Länge STL des Statorkerns STK entspricht.

Ausgehend von der Rotationsachse R weist der Werkzeugkörper WK eine Durchführung WDF mit einem bestimmten Durchmesser zur Aufnahme einer entsprechend angepassten Werkzeugwelle WW auf, auf welcher der Werkzeugkörper WK drehfest gelagert ist. In radialer Richtung RR oberhalb eines sich über die vollständige Länge erstreckenden Stegs des Werkzeugkörpers WK ist eine durchgängige innere Werkzeugnut WNI angeordnet, welche der Aufnahme eines zweiten Werkzeugteils WT2 dient. Das zweite Werkzeugteil WT2 ist insbesondere derart ausgestaltet, dass es von einer Stirnseite des Werkzeugkörpers WK aus in der inneren Werkzeugnut WNI angeordnet und durch eine Montagefachkraft bzw. automatisiert in dieser von einer Stirnseite aus in axialer Richtung AR bewegbar ist. Zur Vereinfachung der Darstellung sind über die Stirnseite des Werkzeugkörpers WK hinausragende Bestandteile des zweiten Werkzeugteils WT2 nicht spezifisch dargestellt.

In radialer Richtung RR oberhalb der inneren Werkzeugnut WNI ist ein weiterer Steg des Werkzeugkörpers WK vorgesehen, welcher die innere Werkzeugnut WNI von der ebenfalls durchgängigen äußeren Werkzeugnut WNA räumlich trennt, wobei die äußere Werkzeugnut WNA wiederum in radialer Richtung RR oberhalb des weiteren Stegs angeordnet ist. Der weitere Steg weist über die Länge des Stegs verteilt angeordnete Öffnungen OE bzw. Durchbrüche auf, wobei diese beispielsweise jeweils im Bereich der Stirnseiten des Werkzeugkörpers WK angeordnet sind. Die Öffnungen OE dienen dazu, die innere WNI und äußere Werkzeugnuten WNA räumlich zu verbinden.

In radialer Richtung RR oberhalb des weiteren Stegs des Werkzeugkörpers WK bzw. im Nutgrund der äußeren Werkzeugnut WNA ist ein erstes Werkzeugteil WT1 angeordnet. Nach dem Beispiel der FIG 5 weist das erste Werkzeugteil WT1 an seiner radialen Oberseite eine durchgängige Fläche auf, mittels welcher das erste Werkzeugteil WT1 eine zweite Spulenseite SS2 mechanisch kontaktiert. Weiterhin weist das erste Werkzeugteil WT1 an seiner radialen Unterseite weitere Flächen, mittels derer sich das zweite Werkzeugteil WT2 auf dem weiteren Steg des Werkzeugkörpers WK abstützt, sowie zwei Ausprägungen in radialer Richtung in Form einer jeweiligen Finne FI auf. Die Finnen FI ragen durch die Öffnungen OE in die innere Werkzeugnut WNI hinein und weisen jeweils eine Flanke mit einer bestimmten Steigung bzw. mit einem bestimmten Winkel relativ zu der Rotationsachse R auf.

Das zweite Werkzeugteil WT2 weist entsprechende Einschnitte ES zur Aufnahme der Finnen FI des ersten Werkzeugteils WT1 auf, wobei die Einschnitte jeweils eine Flanke mit einer Steigung aufweisen, welche mit der Steigung der Finnen FI des ersten Werkzeugteils WT1 kompatibel ist. Über die Flanken der Einschnitte ES und Finnen FI stehen das erste WT1 und das zweite Werkzeugteil WT2 miteinander in mechanischem Kontakt.

Alternativ zu der dargestellten räumlichen Trennung der äußeren WNA und inneren Werkzeugnut WNI mittels eines weiteren Stegs mit über die Länge verteilt angeordneten Öffnungen können äußere und innere Werkzeugnut WNA, WNI auch als eine einzige, in radialer Richtung RR vom Nutgrund bis zur Nutöffnung durchgehende Werkzeugnut ausgestaltet sein. In diesem Fall können eine innere und eine äußere Werkzeugnut als Teilbereiche der Werkzeugnut betrachtet werden, welche durch die Anordnung des zweiten bzw. ersten Werkzeugteils unterschieden werden. Eine solche einzige Werkzeugnut kann beispielsweise im Bereich des in FIG 5 dargestellten weiteren Stegs eine Verjüngung aufweisen, welche die Breite in der Werkzeugnut in diesem Bereich über die gesamte Länge des Werkzeugkörpers WK verringert. Diese Verjüngung kann als eine die gesamte Länge der Werkzeugnut umfassende Öffnung betrachtet werden. Das zweite Werkzeugteil WT2 weist gegenüber dieser Verjüngung eine größere Breite auf, welche beispielsweise weitgehend der Breite der Werkzeugnut entspricht. Hierdurch kann das zweite Werkzeugteil WT2 entsprechend in axialer Richtung AR in der inneren Werkzeugnut bewegt werden, jedoch nicht in der radialen Richtung RR. Die Finnen FI des ersten Werkzeugteils WT1 weisen hingegen eine geringere Breite als die Verjüngung auf, sodass sie in radialer Richtung RR bewegbar sind. Vorzugsweise weisen die Finnen FI jedoch im unteren Bereich der Flanken, d.h. im Bereich der Kontaktfläche mit dem Einschnitt ES des zweiten Werkzeugteils WT2 jeweils eine Verdickung bzw. eine größere Breite als die Verjüngung auf. Vorzugsweise ist ebenso der obere Bereich des ersten Werkzeugteils WT1, welcher in Kontakt mit der zweiten Spulenseite SS2 gebracht wird, breiter als die Verjüngung ausgeführt. Ein Profil des ersten Werkzeugteils kann somit weitgehend dem des lateinischen Großbuchstabens I entsprechen.

Eine solche alternative Ausgestaltung der Werkzeugnut sowie der ersten und zweiten Werkzeugteile ermöglicht einerseits, beide Werkzeugteile von einer Stirnseite des Werkzeugkörpers in die Werkzeugnut einzuführen, andererseits ein Herausfallen des ersten Werkzeugteils in radialer Richtung aus der Werkzeugnut zu verhindern. Vorteilhaft können hierdurch alle Werkzeugnuten bereits vor dem Einführen des Werkzeugs in den Statorinnenraum mit ersten und zweiten Werkzeugteilen bestückt werden, weiterhin können die Werkzeugteile in den Werkzeugnuten verbleiben, wenn das Werkzeug wieder aus dem Statorinnenraum entfernt wird.

FIG 5 zeigt einen ersten Zustand des Werkzeugs W, in einer ersten rotatorischen Position relativ zu dem Stator ST, nachdem es in den Statorinnenraum STI des mit Spulen S bestückten Stators ST eingeführt wurde. Im ersten Zustand ist das Werkzeug W so ausgerichtet, dass die Nutöffnungen der äußeren Werkzeugnuten WNA und der Statornuten STN einander gegenüberliegen. Erste und zweite Werkzeugteile WT1, WT2 befinden sich im ersten Zustand in einer jeweiligen Ausgangsposition, in welcher das erste Werkzeugteil WT1 an dem weiteren Steg des Werkzeugkörpers WK anliegt.

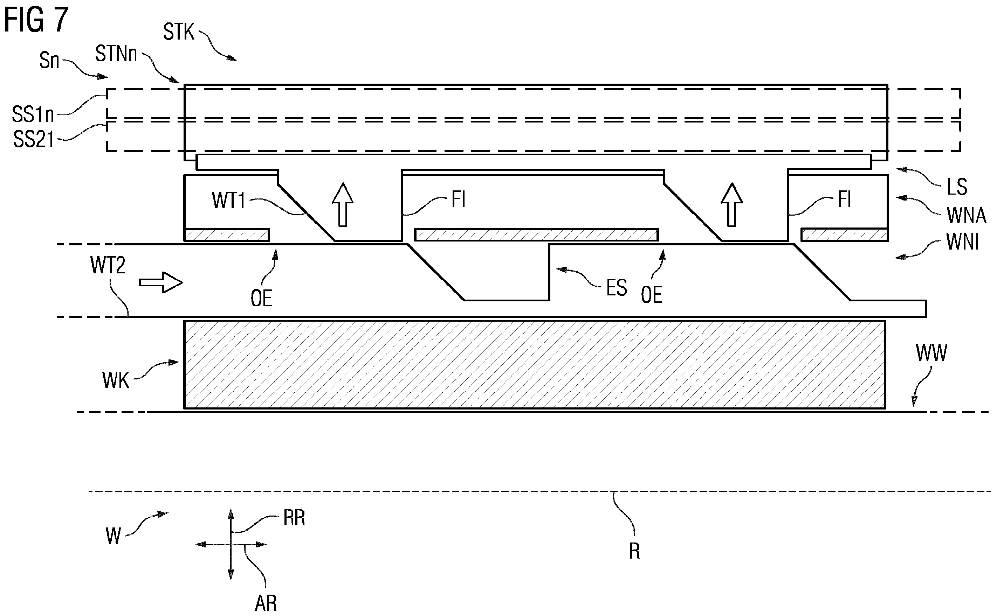

Zur besseren Unterscheidung sind die Spulenseiten SS11, SS21 in FIG 5 bis 7 durch unterbrochene Linien angegeben, wobei nur jeweils eine Teillänge der Geradenstücke dargestellt ist und die in axialer Richtung AR anschließenden Spulenköpfe SK nicht speziell dargestellt sind. Der für die Spulenseiten und die Spule ergänzend verwendete Index 1 dient als Hinweis darauf, dass die erste Spulenseite und Statornut in FIG 5 und 6 von der ersten Spulenseite und Statornut in FIG 7 unterschiedlich sind.

Die in FIG 5 dargestellte Spule S1 bzw. deren Spulenseiten SS11, SS21 sind entsprechend der in FIG 2 dargestellten alternativen Grundform ausgestaltet. Dies bedeutet, dass die Geradenstücke der Spulenseiten SS11, SS21 einen Abstand zueinander aufweisen, welcher weitgehend dem des Luftspalts LS zwischen der Nutöffnung der Statornut STN1 und der Nutöffnung der äußeren Werkzeugnut WNA entspricht. Abhängig von der Tiefe der Statornut STN1 und dem Querschnitt der Spulenseiten kann dieser Abstand dazu führen, dass die erste Spulenseite SS11 nach der Bestückung im Bereich des Nutgrunds der Statornut STN1 angeordnet ist, während die zweite Spulenseite SS21 im Bereich der Nutöffnung der Statornut STN1 angeordnet ist und, wie beispielhaft dargestellt, teilweise über die radiale Innenseite des Statorkerns STK hinaus in den Luftspalt LS hineinragt. Ein solcher Überstand der zweiten Spulenseite SS21 in den Statorinnenraum sollte vorzugsweise kleiner als der Luftspalt LS sein, um eine mögliche Beschädigung der zweiten Spulenseiten SS2 beim Einführen des Werkzeugs W in den Statorinnenraum STI zu vermeiden.

FIG 6 zeigt das Werkzeug W weiterhin in dem ersten Zustand, jedoch nach dem Schritt des Einbringens der zweiten Spulenseite SS21 in die äußere Werkzeugnut WNA, wobei dieses Einbringen manuell durch eine Montagefachkraft oder auch automatisiert erfolgen kann. Die zweite Spulenseite SS2 ist dabei im Bereich der Oberfläche des ersten Werkzeugteils WT1 angeordnet. Zusammen mit der zweiten Spulenseite SS2 wurde die erste Spulenseite SS11 in der Statornut STN in radialer Richtung RR bewegt, sodass diese nunmehr im Bereich der Nutöffnung der Statornut STN1 angeordnet ist. Der Abstand der beiden Spulenseiten SS11, SS21 bleibt aufgrund der Rigidität der Spule S1 während der Bewegung in der Statornut STN1 bzw. der äußeren Werkzeugnut WNA nahezu konstant. Dieser konstant gehaltene Abstand überbrückt, wie in FIG 6 dargestellt, nunmehr den Luftspalt LS zwischen der radialen Innenseite des Statorkerns STK und der radialen Außenseite des Werkzeugkörpers WK. In diesem Zustand bzw. mit dieser Anordnung der ersten und zweiten Spulenseiten SS11, SS21 der Spule S1, bzw. wenn alle Spulen S, mit denen die Statornuten STN des Statorkerns STK bestückt sind, in diesem Zustand sind, erfolgt die Drehbewegung des Werkzeugkörpers WK relativ zu dem Statorkern STK um die Rotationsachse R, wodurch die Spulenköpfe aller Spulen S gleichzeitig geformt werden.

Nach Abschluss der Drehbewegung des Werkzeugkörpers WK relativ zu dem Statorkern STK entsprechend dem gewünschten Nutsprung sind diese in einer zweiten rotatorischen Position relativ zueinander angeordnet, wie sie in FIG 7 dargestellt ist. In dieser zweiten rotatorischen Position liegt die äußere Werkzeugnut WNA, in welcher die zweite Spulenseite SS21 eingebracht wurde, einer anderen Statornut STNn gegenüber, in welcher eine erste Spulenseite SS1n einer anderen Spule Sn eingebracht wurde.

Wie ebenfalls FIG 7 dargestellt, erfolgt in der zweiten rotatorischen Position ein Ausbringen der zweiten Spulenseite SS21 aus der äußeren Werkzeugnut WNA und Einbringen dieser in die andere Statornut STNn. Dies erfolgt durch eine Bewegung des ersten und zweiten Werkzeugteils WT1, WT2 in der respektive äußeren und inneren Werkzeugnut WNA, WNI. Dabei wird, wie mittels eines in die axiale Richtung AR weisenden Pfeils angegeben, das zweite Werkzeugteil WT2 in der inneren Werkzeugnut WNI in axialer Richtung AR bewegt, d.h. tiefer in die innere Werkzeugnut WNI hineingeschoben. Eine hierfür erforderliche Kraft wird ausgehend von der linken Stirnseite des Werkzeugkörpers WK beispielsweise durch eine Montagefachkraft oder maschinell aufgebracht. Die Bewegung des zweiten Werkzeugteils WT2 in axialer Richtung AR bewirkt aufgrund des mechanischen Kontaktes der Flanken der Einschnitte ES des zweiten Werkzeugteils WT2 mit den Flanken der Finnen FI des ersten Werkzeugteils WT1 eine Bewegung des ersten Werkzeugteils WT1 in der äußeren Werkzeugnut WNA in radialer Richtung RR, wie mittels in die radiale Richtung RR weisende Pfeile angegeben. Die Bewegung des ersten Werkzeugteils WT1 in radialer Richtung bewirkt ein Ausbringen der zweiten Spulenseite SS21 aus der äußeren Werkzeugnut WNA und ein Einbringen der zweiten Spulenseite SS21 in die radial gegenüberliegende andere Statornut STNn.

Durch das Einbringen der zweiten Spulenseite SS21 in die andere Statornut STNn wird auch die darin angeordnete andere erste Spulenseite SS1n weiter in Richtung des Nutgrunds der anderen Statornut STNn bewegt. Vorzugsweise ist der Hub der Bewegung des ersten Werkzeugteils WT1 in radialer Richtung RR derart bemessen, dass die andere erste Spulenseite SS1n bis in den Bereich des Nutgrunds bewegt wird und die zweite Spulenseite SS21 über dieser, gegebenenfalls durch einen Streifen aus einem Isoliermaterial getrennt, in der anderen Statornut STNn angeordnet wird. Wie in FIG 7 dargestellt, wird die zweite Spulenseite SS2n dabei etwas tiefer als die Nutöffnung der anderen Statornut STNn eingebracht, die Oberfläche des ersten Werkzeugteils WT1 somit bis in die andere Statornut STNn eingeführt. Dies ermöglicht beispielsweise, nachfolgend im Bereich der Nutöffnung ergänzend einen Nutverschlussstreifen aus einem Isoliermaterial anzuordnen. In der Endposition des ersten Werkzeugteils WT1 können dessen Finnen FI, wie in FIG 7 beispielhaft dargestellt, auf dem zweiten Werkzeugteil WT2 abgestützt sein. Hierdurch kann vorteilhaft ein gleichmäßiges Einbringen der Spulenseiten SS1n, SS21 über die gesamte Länge der anderen Statornut STNn sichergestellt werden. Weiterhin muss in dieser Position keine Kraft in axialer Richtung AR auf das zweite Werkzeugteil WT2 ausgeübt werden.

Nach erfolgtem Einbringen der zweiten Spulenseiten SS2 der Spulen in eine jeweils andere Statornut STN werden die zweiten Werkzeugteile WT2 wieder in die in FIG 5 und 6 dargestellte Ausgangsposition zurückgebracht, sodass keine Krafteinwirkung auf die zweiten Spulenseiten SS2 durch die ersten Werkzeugteile WT1 mehr besteht. In diesem Zustand kann das Werkzeug W wieder über beispielsweise die in FIG 5 bis 7 dargestellte linke Stirnseite aus dem Statorinnenraum STI entfernt werden.

### Bezugszeichenliste

- AR: Axiale Richtung
- DR: Drehrichtung
- ES: Einschnitt
- FI: Finne
- LS: Luftspalt
- OE: Öffnung
- R: Rotationsachse
- RR: Radiale Richtung
- S: Spule
- SK: Spulenkopf
- SS: Spulenseite
- SS1: erste Spulenseite
- SS2: zweite Spulenseite
- ST: Stator
- STI: Statorinnenraum
- STJ: Statorjoch
- STK: Statorkern
- STN: Statornut
- W: Werkzeug
- WDF: (Werkzeug-) Durchführung
- WK: Werkzeugkörper
- WNA: äußere Werkzeugnut
- WNI: innere Werkzeugnut
- WT1: erstes Werkzeugteil
- WT2: zweites Werkzeugteil
- WW: Werkzeugwelle

## Patentansprüche

1. Werkzeug (W) zum Formen und Einbringen von Spulen (S) in einen Stator (ST) einer elektrischen rotierenden Maschine, wobei der Stator (ST) einen Statorkern (STK) aufweist, dessen zylindrischer Statorinnenraum (STI) einer Aufnahme eines um eine Rotationsachse (R) drehbaren Rotors der Maschine dient und an dessen radialen Innenseite Statornuten (STN) zur Aufnahme erster und zweiter Spulenseiten (SS1, SS2) einer Mehrzahl Spulen (S) ausgebildet sind, und wobei das Werkzeug (W) zumindest aufweist:
- einen zylindrischen Werkzeugkörper (WK), welcher in dem Statorinnenraum (STI) anordenbar und relativ zu dem Stator (ST) um die Rotationsachse (R) drehbar ist, und
- eine Mehrzahl äußere Werkzeugnuten (WNA), welche an einer radialen Außenseite des Werkzeugkörpers (WK) angeordnet und jeweils ausgestaltet sind, eine zweite Spulenseite (SS21) einer Spule (S1) aufzunehmen,
wobei
- die äußeren Werkzeugnuten (WNA) ferner jeweils ausgestaltet sind, die zweite Spulenseite (SS21) in einer bezüglich der Rotationsachse (R) ersten Position des Werkzeugkörpers (WK) relativ zu dem Stator (ST) aufzunehmen, wobei eine erste Spulenseite (SS11) der Spule (S1) in einer Statornut (STN1) verbleibt,
- der Werkzeugkörper (WK) ferner ausgestaltet ist, eine Drehung von der ersten Position zu einer bezüglich der Rotationsachse (R) zweiten Position relativ zu dem Stator (ST) auszuführen, um die erste und zweite Spulenseiten (SS1, SS2) jeweils verbindende Spulenköpfe (SK) der Spulen (S) zu formen,
und
- die Mehrzahl äußere Werkzeugnuten (WNA) jeweils ausgestaltet sind, zumindest ein innerhalb der äußeren Werkzeugnut (WNA) in radialer Richtung (RR) bewegbares erstes Werkzeugteil (WT1) sowie radial oberhalb des zumindest einen ersten Werkzeugteils (WT1) die zweite Spulenseite (SS21) einer Spule (S1) aufzunehmen, und
- die ersten Werkzeugteile (WT1) ferner jeweils ausgestaltet sind, in der zweiten Position mittels einer Bewegung in radialer Richtung (RR) die zweite Spulenseite (SS21) der Spule (S1) in eine Statornut (STNn) einzubringen,
**dadurch gekennzeichnet, dass** das Werkzeug (W) ferner aufweist:
- eine Mehrzahl innere Werkzeugnuten (WNI), welche radial unterhalb der äußeren Werkzeugnuten (WNA) in dem Werkzeugkörper (WK) angeordnet sind, und
- eine Mehrzahl zweite Werkzeugteile (WT2), welche in den inneren Werkzeugnuten (WNI) jeweils bewegbar angeordnet sind,
- wobei die ersten und zweiten Werkzeugteile (WT1, WT2) jeweils ausgestaltet sind, mittels einer Bewegung des zweiten Werkzeugteils (WT2) die Bewegung des ersten Werkzeugteils (WT1) in der äußeren Werkzeugnut (WNA) in radialer Richtung (RR) zu bewirken,
- wobei die zweiten Werkzeugteile (WT2) insbesondere von zumindest einer Stirnseite des Werkzeugkörpers (WK) aus bewegbar sind,
- wobei die ersten Werkzeugteile (WT1) jeweils zumindest eine Finne (FI) und die zweiten Werkzeugteile (WT2) jeweils zumindest einen Einschnitt (ES) aufweisen,
- wobei die Finne (FI) und der Einschnitt (ES) ausgestaltet sind, dass eine Bewegung des zweiten Werkzeugteils (WT2) in axialer Richtung (AR) die Bewegung des ersten Werkzeugteils (WT1) in radialer Richtung (RR) bewirkt.

2. Werkzeug (W) nach Patentanspruch 1, wobei
in dem Werkzeugkörper (WK) zwischen einer äußeren Werkzeugnut (WNA) und einer inneren Werkzeugnut (WNI) ein Steg angeordnet ist, wobei der Steg zumindest eine Öffnung (OE) aufweist, welche die äußere Werkzeugnut (WNA) mit der inneren Werkzeugnut (WNI) räumlich verbindet, und
die zumindest eine Finne (FI) des ersten Werkzeugteils (WT1) ausgestaltet ist, durch die Öffnung (OE) hindurch in die innere Werkzeugnut (WNI) zu ragen.

3. Verwendung eines Werkzeugs (W) nach einem der Patentansprüche 1 bis 2, zum Formen und Einbringen von Spulen (S) in einen Stator (ST) einer elektrischen rotierenden Maschine.

## Claims

1. Tool (W) for shaping and introducing coils (S) into a stator (ST) of an electric rotating machine, wherein the stator (ST) has a stator core (STK), the cylindrical stator interior (STI) of which serves to receive a rotor of the machine which is rotatable about an axis of rotation (R) and on the radial inner side of which stator slots (STN) are embodied for receiving first and second coil sides (SS1, SS2) of a plurality of coils (S), and wherein the tool (W) has at least:
- a cylindrical tool body (WK), which can be arranged in the stator interior (STI) and is rotatable relative to the stator (ST) about the axis of rotation (R), and
- a plurality of external tool slots (WNA) which are arranged on a radial outer side of the tool body (WK) and are configured in each case to receive a second coil side (SS21) of a coil (S1),
wherein
- the outer tool slots (WNA) are further configured in each case to receive the second coil side (SS21) in a first position of the tool body (WK) in terms of the axis of rotation (R) which is relative to the stator (ST), wherein a first coil side (SS11) of the coil (S1) remains in a stator slot (STN1),
- the tool body (WK) is further configured to execute a rotation from the first position to a second position in terms of the axis of rotation (R) which is relative to the stator (ST) in order to shape coil heads (SK) of the coils (S) which connect the first and second coil sides (SS1, SS2) in each case,
and
- the plurality of outer tool slots (WNA) are configured in each case to receive at least a first tool part (WT1) which can be moved within the outer tool slot (WNA) in the radial direction (RR) and to receive the second coil side (SS21) of a coil (S1) radially above the at least one first tool part (WT1), and
- the first tool parts (WT1) are further configured in each case, in the second position, to introduce the second coil side (SS21) of the coil (S1) into a stator slot (STNn) by means of a movement in the radial direction (RR),
**characterised in that** the tool (W) further has:
- a plurality of inner tool slots (WNI) which are arranged radially beneath the outer tool slots (WNA) in the tool body (WK), and
- a plurality of second tool parts (WT2) which are arranged in each case in a moveable manner in the inner tool slots (WNI), and
- wherein the first and second tool parts (WT1, WT2) are configured in each case to cause the first tool part (WT1) to move in the outer tool slot (WNA) in the radial direction (RR) by means of a movement of the second tool part (WT2),
- wherein the second tool parts (WT2) can be moved out in particular from at least one end face of the tool body (WK),
- wherein the first tool parts (WT1) in each case have at least one fin (FI) and the second tool parts (WT2) in each case have at least one recess (ES),
- wherein the fin (FI) and the recess (ES) are configured such that a movement of the second tool part (WT2) in the axial direction (AR) causes the first tool part (WT1) to move in the radial direction (RR).

2. Tool (W) according to claim 1, wherein
a web is arranged in the tool body (WK)between an outer tool slot (WNA) and an inner tool slot (WNI), wherein the web has at least one aperture (OE), which spatially connects the outer tool slot (WNA) to the inner tool slot (WNI), and
the at least one fin (FI) of the first tool part (WT1) is configured to protrude through the opening (OE) into the inner tool slot (WNI).

3. Use of a tool (W) according to one of claims 1 to 2, to shape and introduce coils (S) into a stator (ST) of an electric rotating machine.

## Revendications

1. Outil (W) de mise en forme et d'introduction de bobines (S) dans un stator (ST) d'une machine électrique tournante, dans lequel le stator (ST) a un noyau (STK) statorique, dont l'espace (STI) intérieur statorique cylindrique sert de logement à un rotor de la machine, tournant autour d'un axe (R) de rotation, et dont la face intérieure radiale a des encoches (STN) statoriques pour la réception de premiers et deuxièmes côtés (SS1, SS2) de bobines d'une pluralité (S) de bobines, et dans lequel l'outil (W) a au moins :
- un corps (WK) cylindrique d'outil, qui peut être mis dans l'espace (STI) intérieur statorique et qui peut tourner, par rapport au stator (ST), autour de l'axe (R) de rotation, et
- une pluralité d'encoches (WNA) extérieures d'outil, qui sont disposées sur une face extérieure radiale du corps (WK) de l'outil et qui sont conformées chacune pour recevoir un deuxième côté (SS21) d'une bobine (S1),
dans lequel
- les encoches (WNA) extérieures de l'outil sont conformées en outre chacune pour recevoir le deuxième côté (SS21) de bobine en une première position, par rapport à l'axe (R) de rotation, du corps (WK) de l'outil par rapport au stator (ST), dans lequel un premier côté (SS11) de la bobine (S1) reste dans une encoche (STN1) statorique,
- le corps (WK) de l'outil est conformé en outre pour exécuter, relativement au stator (ST), une rotation de la première position à une deuxième position, par rapport à l'axe (R) de rotation, afin de former des têtes (SK) de bobines, reliant respectivement les premiers et deuxièmes côtés (SS1, SS2) de bobine, des bobines (S), et
- la pluralité d'encoches (WNA) extérieures d'outil sont conformées chacune pour recevoir une première partie (WT1) d'outil mobile dans la direction (RR) radiale, à l'intérieur de l'encoche (WNA) extérieure d'outil ainsi que, radialement au-dessus de la au moins une première partie (WT1) d'outil, le deuxième côté (SS21) d'une bobine (S1), et
- les premières parties (WT1) d'outil sont conformées en outre chacune pour, dans la deuxième position au moyen d'un déplacement dans la direction (RR) radiale, introduire le deuxième côté (SS21) de la bobine (S1) dans une encoche (STNn) statorique,
**caractérisé en ce que** l'outil (W) a en outre :
- une pluralité d'encoches (WNI) intérieure d'outil, qui sont disposées radialement, dans le corps (WK) de l'outil, en-dessous des encoches (WNA) extérieures d'outil, et
- une pluralité de deuxièmes parties (WT2) d'outil, qui sont montées respectivement de manière mobile dans les encoches (WNI) intérieures de l'outil,
- dans lequel les premières et deuxièmes parties (WT1, WT2) de l'outil sont conformées chacune pour, au moyen d'un déplacement de la deuxième partie (WT2) d'outil, provoquer le déplacement de la première partie (WT1) d'outil dans l'encoche (WNA) extérieure d'outil dans la direction (RR) radiale,
- dans lequel les deuxièmes parties (WT2) d'outil sont mobiles, en particulier à partir d'au moins un côté frontal du corps (WK) de l'outil,
- dans lequel les premières parties (WT1) de l'outil ont chacune au moins une panne (FI) et les deuxièmes parties (WT2) de l'outil respectivement au moins une entaille (ES),
- dans lequel la panne (FI) et l'entaille (ES) sont conformées de manière à ce qu'un déplacement de la deuxième partie (WT2) d'outil dans la direction (AR) axiale provoque le déplacement de la première partie (WT1) d'outil dans la direction (RR) radiale.

2. Outil (W) suivant la revendication 1, dans lequel
une entretoise est montée dans le corps (WK) de l'outil entre une encoche (WNA) extérieure de l'outil et une encoche (WNI) de l'outil, dans lequel l'entretoise a au moins une ouverture (OE), qui met, dans l'espace, l'encoche (WNA) extérieure de l'outil en communication avec l'encoche (WNI) intérieure de l'outil, et
la au moins une panne (FI) de la première partie (WT1) de l'outil est conformée pour faire saillie dans l'encoche (WNI) intérieure de l'outil, en passant par l'ouverture (OE).

3. Utilisation d'un outil (W) suivant l'une des revendications 1 à 2, pour la mise en forme et l'introduction de bobines (S) dans un stator (ST) d'une machine électrique tournante.
